Europäisches Patentamt

European Patent Office

Office européen des brevets

(19)

(11) Veröffentlichungsnummer : **0 357 700 B1**

## (12) EUROPÄISCHE PATENTSCHRIFT

(45) Veröffentlichungstag der Patentschrift :
**13.05.92 Patentblatt 92/20**

(51) Int. Cl.$^5$ : **F16B 25/00**

(21) Anmeldenummer : **89901276.9**

(22) Anmeldetag : **16.01.89**

(86) Internationale Anmeldenummer :
**PCT/EP89/00042**

(87) Internationale Veröffentlichungsnummer :
**WO 89/07207 10.08.89 Gazette 89/18**

(54) SELBSTBOHRENDE UND -GEWINDESCHNEIDENDE SCHRAUBE ZUM EINDREHEN IN GASBETON.

(30) Priorität : **29.01.88 AT 187/88**

(43) Veröffentlichungstag der Anmeldung :
**14.03.90 Patentblatt 90/11**

(45) Bekanntmachung des Hinweises auf die
Patenterteilung :
**13.05.92 Patentblatt 92/20**

(84) Benannte Vertragsstaaten :
**AT BE CH DE FR GB IT LI LU NL SE**

(56) Entgegenhaltungen :
**AU-B-53 702 /86**
**DE-A- 3 207 975**
**DE-A- 3 235 352**
**FR-A- 2 449 225**

(73) Patentinhaber : **SFS Stadler Holding AG**
**Nefenstrasse 30**
**CH-9435 Heerbrugg (CH)**

(72) Erfinder : **FREI, Markus**
**Johann Dirauer-Strasse 5**
**CH-9442 Bernegg (CH)**

## Beschreibung

Die Erfindung betrifft eine selbstbohrende und -gewindeschneidende Schraube zum Eindrehen in Gasbeton mit einem gegenüber dem Kerndurchmesser wenigstens 1,5-fachen Aussendurchmesser, wobei das von zwei Erzeugenden begrenzte Gewindeprofil in bezug auf eine rechtwinklig zur Schraubenachse geführte Ebene asymmetrisch ausgeführt ist und wobei die Erzeugende der dem Schraubenkopf abgewandten Schraubenende zugewandten Gewindeflanken im wesentlichen von einer Geraden gebildet ist, welche mit einer rechtwinklig zur Schraubenachse geführten Ebene einen spitzen Winkel von annähernd 0° bis 25° einschliesst.

Es ist bereits eine Porenbetonschraube (DE-A-29 12 924) bekannt geworden, bei der die Gewindegänge zwischen den Graten kreisförmig eingezogen sind. Bei grosser Zugbelastung auf diese Schraube wird sich gerade in Porenbeton bzw. Gasbeton kein grosser Widerstand ergeben, da die Gewindegänge zu wenig stark in das Material eingreifen.

Es ist auch ein selbstfurchende Schraube (DE-A-31 14 138) bekannt geworden, bei welcher die tragenden, dem Schraubenkopf zugewandten Gewindeflanken in radialer Richtung länger sind als die nichttragenden Gewindeflanken, welche dem Schraubenende zugewandt sind. Der mittlere Flakenneigungswinkel der dem Schraubenkopf zugewandten Gewindeflanken ist dabei relativ flach, so dass die Kraftresultierende bei Zugbelastung auf die eingesetzte Schraube den gleichen Winkel Schraubenmittelachse einschliesst. Dies verringert um ein wesentliches die nötige Kraft zum Ausreissen einer solchen Schraube, falls diese in Porenbeton bzw. Gasbeton eingesetzt würde.

Weiters ist aus der DIN-Norm 58810 bekannt, ein Gewindeprofil bei Schrauben oder Muttern vorzusehen, welches bezüglich einer senkrecht zur Schraubenachse geführten Ebene asymmetrisch ausgeführt ist. Die in Richtung zum Schraubenkopf weisende Gewindeflanke ist von einer in dieser Ebene liegenden Erzeugenden begrenzt, wobei die Erzeugende der der Schraubenspitze zugewandten Gewindeflanke entsprechend einem Kreisbogen in den Kernabschnitt übergeht. Es soll dadurch eine rechtwinklig zur Schraubenachse verlaufende Anlagefläche in Zugrichtung der Schraube erreicht werden. Beim Einsatz in Gasbeton wäre eine solche Anordnung völlig verfehlt, da praktisch bei einer Zugbelastung auf die Schraube die Kräfte achsparallel zur Schraubenachse verlaufen, so dass die zwischen den Gewindegängen liegenden Gasbetonabschnitte ohne allzu grossen Widerstand abgeschert würden.

Es ist ferner eine selbstformende Schraube (DE-A-32 35 352) bekannt geworden, welche zum Eindrehen in glatte Löcher ausgebildet ist. In der Wandung dieser Löcher formt die Schraube ein Gewinde ein. Diese gewindeformende Schraube hat einen gegenüber dem Kerndurchmesser wenigstens 1,5-fachen Aussendurchmesser, wobei das Gewindeprofil in bezug auf eine rechtwinklig zur Schraubenachse geführte Ebene asymmetrisch ausgeführt ist. Die Erzeugenden des Gewindeprofils sind als Gerade ausgeführt. Durch die asymmetrische Ausbildung des Gewindeprofils soll erreicht werden, dass bei einem gegebenen Flankenwinkel eine stärkere Neigung der Lastflanke erzielt wird. Damit vergrössert sich der Reibungswiderstand, der dem Eindrehen der Schraube entgegenwirkt. Eine solche Schraube mag für das Eindrehen in vorgebohrte Löcher zweckmässig sein und zwar auch im Einsatz bei Kunststoffen, wobei aber ein Einsatz in Gasbeton und insbesondere bei selbstbohrenden und gewindeformenden Schrauben zum Eindrehen in Gasbeton mit der vorgegebenen Geometrie nicht möglich wäre.

Die vorliegende Erfindung hat sich daher zur Aufgabe gestellt, eine speziell für den Einsatz in Gasbeton ohne Vorbohren und ohne Verwendung von Dübeln geeignete, selbstbohrende und -gewindeschneidende Schraube zu schaffen, welche gerade in den die Zugbelastung aufzunehmenden Bereichen im Gasbeton eine besondere Verdichtung des Materials bewirkt und ausserdem einen relativ grossen gegenseitigen Verzahnungseingriff zwischen der Schraube und dem umgebenden Material gewährleistet.

Erfindungsgemäss wird dazu vorgeschlagen, dass die Erzeugende der dem Schraubenkopf zugewandten Gewindeflanke zumindest abschnittweise von der Gewindeaussenbegrenzung zum Kern hin übergehend kreis- oder parabelförmig verläuft oder aus einer Vielzahl, gegebenenfalls abgestuft aneinander anschliessenden, geraden oder gekrümmten Linienabschnitten gebildet ist, welche einer Kreis- oder Parabelform annähernd folgen, wobei der mittlere Neigungswinkel der Erzeugenden der dem Schraubenkopf zugewandten Gewindeflanke annähernd 60 ° zu einer rechtwinklig zur Schraubenachse geführten Ebene beträgt, und dass der Kern des Gewindeabschnittes des Schraubenschaftes zwischen benachbarten Gewindegängen zylindrisch ausgeführt ist.

Durch diese erfindungsgemässen Massnahmen wird gerade jener Bereich, welcher bei Zugbelastung auf die eingesetzte Schraube besonders belastet ist, wesentlich stärker verdichtet als derjenige Bereich, welcher der der Schraubenspitze zugewandten Gewindeflanke zugeordnet ist. Da solche Schrauben praktisch immer nur einer Zugbelastung ausgesetzt sind, soll ja auch nur eine entsprechende Sicherheit in Auszugsrichtung erzielt werden. Es ist daher trotz der einseitig kreis- oder parabelförmig verlaufenden Erzeugenden für die eine Gewindeflanke ein im Querschnitt schlankes Gewinde gegeben, so dass relativ grosse Abschnitte des umgebenden Materials zwischen den Gewindegängen eingreifen können.

Durch die besondere Ausbildung der dem Schraubenkopf zugewandten Gewindeflanke ist auch gewährleistet, dass sich die Kraftresultierenden, die bei einer Zugbelastung auf die Schraube vom umgebenden Material im Gasbeton aufgenommen werden müssen, in einem relativ grossen Winkel gegenüber der Schraubenmittelachse nach aussen gerichtet sind und somit eine Krafteinleitung in die seitlich neben der eingesetzten Schraube liegenden Materialabschnitte ermöglicht wird. Es wird also die bei einer Zugbelastung auftretende Kraft optimal in das die Schraube umgebende Gasbeton-Material eingeleitet, da die Kraftresultierende in einem relativ flachen Winkel von annähernd 30° zu der quer zur Schraubenachse gedachten Ebene ausgerichtet ist. Es hat sich gezeigt, dass trotz des durch die besondere Gewindeform doch etwas vergrösserten Gewindevolumens und etwa gleichem, gesamtem Befestigervolumen gegenüber vergleichbaren bekannten Schrauben die Ausreisswerte wesentlich erhöht werden konnten.

Durch die zylindrische Ausbildung des Schraubenschaftes zwischen den benachbarten Gewindegängen ist eine sichere, umfangsgeschlossene Anlage des Gasbeton-Materials am Kernabschnitt gewährleistet.

Weitere erfindungsgemäße Merkmale und besondere Vorteile werden in der nachstehenden Beschreibung anhand der Zeichnung noch näher erläutert. Es zeigen:

Fig. 1 eine erfindungsgemäße Schraube in Seitenansicht;

Fig. 2 das in Fig. 1 bezeichnete Detail A, vergrößert dargestellt;

Fig. 3 einen Teil des Gewindeabschnittes der Schraube gemäß Fig. 1, vergrößert dargestellt;

die Fig. 4 bis 6 Teile von Gewindeabschnitten bekannter Schrauben.

Bei der vorliegenden Schraube geht es um eine spezielle Konstruktion, um eine optimale Ausführung gerade für das Eindrehen in Gasbeton zu erreichen. Infolge der gegenüber anderen Materialien doch geringeren Druckfestigkeit und Scherfestigkeit bedarf es der Ausnützung auch kleinster Details, um die optimale Wirksamkeit und Sicherheit einer Schraubenbefestigung zu erreichen. Außerdem ist es dabei zweckmäßig, die Möglichkeit auszunutzen, eine solche Schraube direkt, also ohne Vorbohren und ohne Dübel, in einen Gasbetonkörper einzudrehen.

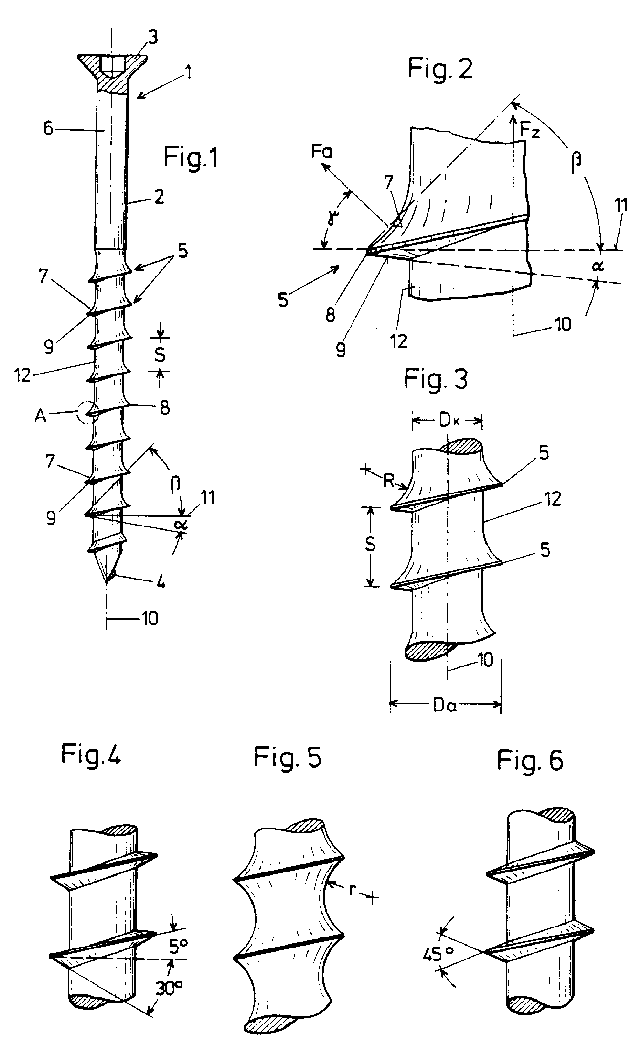

Die Schraube nach den Fig. 1 bis 3 besteht aus einem Schaft 2 und einem Schraubenkopf 3 sowie einer Bohrspitze 4. Der Schraubenschaft 2 ist über einen Teil dessen Länge oder über dessen ganze Länge mit einem Gewindeabschnitt 5 versehen. Bei der in Fig. 1 gezeigten Ausführungsform ist zwischen Schraubenkopf 3 und dem Gewindeabschnitt 5 ein gewindefreier Abschnitt 6 vorgesehen.

Damit das Gewinde 5 relativ weit in das Gasbetonmaterial eindringt, ist der Außendurchmesser $D_a$ wenigstens 1,5-fach größer als der Kerndurchmesser $D_k$.

Die dem Schraubenkopf zugewandte Gewindeflanke 7 ist beim gezeigten Beispiel von der Gewindeaußenbegrenzung 8 zum Kern hin übergehend von einer kreisförmig verlaufenden Erzeugenden begrenzt, wobei dieser Übergang entsprechend dem Radius R in Fig. 3 verläuft. Diese Gewindeflanke 7 ist dem Schraubenkopf 3 zugewandt. Die der Bohrspitze 4 zugewandte Gewindeflanke 9 wird von einer im wesentlichen geraden Erzeugenden begrenzt, welche mit einer senkrecht zur Schraubenachse 10 geführten Ebene 11 einen spitzen Winkel $\alpha$ von etwa 10 ° einschließt. Dieser Winkel $\alpha$ liegt zweckmäßig im Bereich von annähernd 0 bis 25 °. Es ist also hier darauf geachtet, daß gerade im Bereich der zur Schraubenspitze weisenden Gewindeflanke nur ein geringes Volumen des Gewindeabschnittes 5 anfällt, so daß der zwischen den Gewindegängen hineinragende Gasbeton-Abschnitt einen relativ großen Querschnitt beibehält. Durch die besondere Ausbildung der dem Schraubenkopf 3 zugewandten Gew-indeflanke 7 ergibt sich ein mittlerer Flankenneigungswinkel $\beta$ von etwa 60 ° zu der senkrecht zur Schraubenachse geführten Ebene 11. Damit ist auch die bei einer Zugbelastung auftretende Kraft $F_z$ optimal in das die Schraube umgebende Gasbeton-Material einzuleiten, da die Kraftresultierende $F_a$ in einem relativ flachen Winkel $\gamma$ von annähernd 30 ° zur quer zur Schraubenachse gedachten Ebene 11 ausgerichtet ist.

Bei einem durchgehenden zylindrischen Schraubenschaft 2 ist der Kernabschnitt 12 des Gew-Gewindeabschnittes zwischen den Gewindeflanken zylindrisch ausgeführt, so daß eine sichere, umfangsgeschlossene Anlage des Gasbeton-Materials am Kernabschnitt gewährleistet ist. Je nach Ausbildung der Gewindeflanke 7 reicht der zylindrische Kernabschnitt 12 über einen kleineren oder größeren Bereich zwischen jeweils zwei Gewindegängen, wenigstens jedoch über eine der halben Gewindesteigung S entsprechende Länge.

In der vorstehenden Beschreibung wurde davon ausgegangen, daß die Gewindeflanke 7 von einer kreisbogenförmigen Erzeugenden mit dem Radius R gebildet wird. Es wäre auch denkbar, daß die Erzeugende der Gewindeflanke 7 zum Kern hin übergehend parabelförmig ausläuft. Auch wäre es denkbar, den Verlauf der Erzeugenden der Gewindeflanke 7 aus einer Vielzahl, gegebenenfalls abgestuft aneinander anschließenden, geraden oder gekrümmten Linienabschnitten zu bilden, wobei jedoch die so gebildete Erzeugende wiederum einer Kreis- oder Parabelform annähernd folgt.

Ein weiteres zweckmäßiges Merkmal der erfindungsgemäßen Schrauben liegt darin, daß die Gewindesteigung exakt dem Materialverhältnis bei Gasbeton angepaßt werden kann. Bei einem gegebenen Kerndurch-

messer $D_k$ und einem gegebenen Außendurchmesser $D_a$ wird somit die Gewindesteigung S aus dem annähernd 4 bis 5 betragenden Verhältnis der Druckfestigkeit und der Scherfestigkeit von Gasbeton abgeleitet. Dabei ist der gleiche Verhältniswert dem Vergleich der Scherfläche pro Gewindesteigung S und der Druchfläche pro Gewindesteigung zugrunde gelegt. Die Druckfläche ist dabei jene Kreisringfläche, die pro Gewindesteigung zwischen dem Kern 12 des Gewindeabschnittes des Schraubenschaftes 2 und der Gewinde spitze 8 gebildet wird. Die Scherfläche pro Gewindesteigung entspricht einer umfangsgeschlossenen Hüllfläche zwischen zwei Gewindegängen über die Höhe eines Gewindeganges. Gerade durch die besondere konstruktive Ausgestaltung der erfindungsgemäßen Schraube und die mögliche Krafteinleitung in das umgebende Material des Gasbetons in einem relativ flachen Winkel ergibt sich diese Berechnungsmöglichkeit für die Steigung, da eben gerade durch die besondere Konstruktion eine relativ große Gewindesteigung ermöglicht wird.

Trotz wesentlich verbesserter Ausreißwerte der erfindungsgemäßen Schraube gegenüber bekannten Konstruktionen ist eine wirtschaftlichere Herstellung durch eienen relativ geringen Materialaufwand möglich und außerdem ergibt sich die Möglichkeit, trotzdem relativ viel Gasbeton-Material zwischen den Gewindegängen zu belassen. Durch die relativ geringe Materialverdrängung beim Eindrehen einer solchen Schraube wird auch eine Sprengwirkung im Gasbeton-Material verhindert.

Daß gerade durch diese besondere Konstruktion einer Schraube verbesserte Ausreißwerte erzielt werden, kann der nachstehend angeführten Vergleichstabelle entnommen werden, welche die Mittelwerte aus mehreren Versuchen darstellen. In dieser Vergleichstabelle werden Schraubenausführungen mit Gewindeformen nach den Fig. 1 bis 3 bzw. 4, 5 und 6 der Zeichnung verglichen.

Bei diesen Versuchen hatten die Schräuben folgende gemeinsame und damit übereinstimmende Abmessungen:

Kerndurchmesser:     5 mm
Außendurchmesser:     8 mm
Gewindesteigung:     5,8 mm
Gewindelänge:     60 mm
Eindringtiefe:     10 mm

| Gewindeform gemäß Fig.: | Ausreiß-werte Fz N | Verdrängtes Gewinde-volumen Vg $m^3$ | Verdrängtes Befesti-gervolumen Vb $m^3$ |
|---|---|---|---|
| Fig. 1-3 | 3152 | 420,34 | 1991,14 |
| Fig. 4 | 2733 | 260,34 | 1831,14 |
| Fig. 5 | 2918 | 721,36 | 2292,16 |
| Fig. 6 | 2737 | 308,19 | 1878,99 |

Es wurde in der obigen Beschreibung erläutert, daß durch die besondere Ausbildung des Gewindeprofils ein asymmetrischer Aufbau desselben gegeben ist. Da es unter Umständen zur Herstellung bzw. zum Eindrehen der Schraube zweckmäßiger sein könnte, ein symmetrisches Gewindeprofil zu haben, könnte das asymmetrische Gewindeprofil über den größten Teil des Gewindeabschnittes verlaufen, wobei die ersten paar auf die Bohrspitze 4 folgenden Gewindegänge ein symmetrisches Gewindeprofil aufweisen. Falls überhaupt notwendig, würde es dabei genügen, wenn die ersten eineinhalb Gewindegänge, welche auf die Bohrspitze folgen, ein symmetrisches Gewindeprofil aufweisen.

Eine Ausführungsvariante der Schraube 1 liegt noch darin, wenn der Außen- und der Kerndurchmesser des Gew-Gewindeabschnittes des Schraubenschaftes 2 von der Bohrspitze 4 ausgehend zum Schraubenkopf 3 hin konisch zunehmen. Es wäre dann also auch der Kernabschnitt 12 jeweils zwischen zwei Gewindegängen nicht zylinderförmiger ausgebildet, sondern eben kegelig bzw. kegelstumpfförmig. Das Verhältnis von Außendurchmesser zu Kendurchmesser und weiters die Gewindesteigung über die ganze Länge des Schraubenschaftes würden in einem solchen Falle konstant bleiben. Gerade für eine Befestigung in Gasbeton könnte sich eine solche Ausführung bewähren, da bei entsprechend tieferem Einschrauben das die Schraube umgebende Gasbeton-Material ständig weiter verdichtet würde.

In Fig.1 ist ein versenkbarer Schraubenkopf 3 mit einer Angriffsöffnung für einen Sechskantschlüssel gezeigt. Die Ausbildung des Schraubenkopfes 3 kann natürlich auf die verschiedenste Art und Weise je nach Einsatzzweck der Schraube 1 gewählt werden. Es kommt ja lediglich auf die besondere Ausbildung des Gewindes an, zumal diese Schraube speziell zum Eindringen in Gasbeton geeignet sein muß.

EP 0 357 700 B1

## Patentansprüche

1. Selbstbohrende und -gewindeschneidende Schraube zum Eindrehen in Gasbeton mit einem gegenüber dem Kerndurchmesser wenigstens 1,5-fachen Aussendurchmesser, wobei das von zwei Erzeugenden begrenzte Gewindeprofil in bezug auf eine rechtwinklig zur Schraubenachse (10) geführte Ebene (11) asymmetrisch ausgeführt ist und wobei die Erzeugende der dem Schraubenkopf abgewandten Schraubenende zugewandten Gewindeflanken (9) im wesentlichen von einer Geraden gebildet ist, welche mit einer rechtwinklig zur Schraubenachse (10) Beführten Ebene (11) einen spitzen Winkel von annähernd 0° bis 25° einschliesst, dadurch gekennzeichnet, dass die Erzeugende der dem Schraubenkopf (3) zugewandten Gewindeflanke (7) zumindest abschnittweise von der Gewindeaussenbegrenzung zum Kern (12) hin übergehend kreis- oder parabelförmig verläuft oder aus einer Vielzahl, gegebenenfalls abgestuft aneinander anschliessenden, geraden oder gekrümmten Linienabschnitten gebildet ist, welche einer Kreis- oder Parabelform annähernd folgen, wobei der mittlere Neigungswinkel ($\beta$) der Erzeugenden der dem Schraubenkopf (3) zugewandten Gewindeflanke (7) annähernd 60 ° zu einer rechtwinklig zur Schraubenachse ( 10) Beführten Ebene (11) beträgt, und dass der Kern ( 12) des Gewindeabschnittes des Schraubenschaftes (2) zwischen benachbarten Gewindegängen (5) zylindrisch ausgeführt ist.

2. Schraube nach Anspruch 1, dadurch gekennzeichnet, dass der zylindrische Kernabschnitt (12) zwischen zwei benachbarten Gewindegängen (5) wenigstens über die halbe Gewindesteigung (5) führt.

3. Schraube nach Anspruch 1 und einem der vorhergehenden Ansprüche, dadurch gekennzeichnet, dass der Aussen- und der Kerndurchmesser des Gewindeabschnittes des Schraubenschaftes (2) von der Bohrspitze (4) ausgehend zum Schraubenkopf (3) hin konisch zunehmen.

4. Schraube nach Anspruch 3, dadurch gekennzeichnet, dass das Verhältnis von Aussendurchmesser zu Kerndurchmesser über die ganze Länge des Gewindeabschnittes des Schraubenschaftes (2) konstant bleibt.

## Claims

1. A self-driving and self-tapping screw for screwing into porous concrete, with an external diameter which is at least 1.5 times the core diameter, wherein the thread profile, which is delimited by two generating lines, is formed so as to be asymmetrical in relation to a plane (11) extending at right angles to the screw axis (10), and the generating line of the thread flanks (9), which face the screw end and face away from the screw head, is formed substantially by a straight line, which forms an acute angle of approximately 0° to 25° with a plane (11) extending at right angles to the screw axis (10), characterised in that the generating line of the thread flank (7) facing the screw head (3) extends at least partially in a circular or parabolic manner as it passes over from the external boundary of the thread towards the core (12) or is formed from a plurality of straight or curved line portions which have a substantially circular or parabolic form and, where appropriate, adjoin one another in a stepped manner, the central angle of inclination ($\beta$) of the generating line of the thread flank (7) which faces the screw head (3) being substantially 60° relative to a plane (11) extending at right angles to the screw axis (10), and in that the core (12) of the threaded portion of the screw shaft (2) is formed so as to be cylindrical between adjacent threads (5).

2. A screw according to Claim 1, characterised in that the cylindrical core portion (12) extends between two adjacent threads (5) over at least half the thread pitch (5).

3. A screw according to Claim 1 and any one of the preceding claims, characterised in that the external diameter and the core diameter of the threadedportion of the screw shaft (2) increase conically from the drilling tip (4) towards the screw head (3).

4. A screw according to Claim 3, characterised in that the ratio of the external diameter to the core diameter remains constant over the entire length of the threaded portion of the screw shaft (2).

## Revendications

1. Vis autoforeuse et autotaraudeuse destinée à être posée dans du béton poreux, ayant un diamètre extérieur au moins 1,5 fois le diamètre de noyau, vis dans laquelle le profil du filetage délimité par deux génératrices est réalisé asymétrique par rapport à un plan (11) perpendiculaire à l'axe (10) de la vis et dans laquelle la génératrice des flancs de filet (9) opposés à la tête de la vis et tournés vers l'extrémité de cette vis est constituée essentiellement d'une droite, qui forme un angle aigu approximativement compris entre 0° et 25° avec un plan (11) perpendiculaire à l'axe (10) de la vis, vis caractérisée, en ce que la génératrice du flanc de filet (7) tourné vers la tête (3) de la vis se développe au moins par secteur en forme de cercle ou de parabole en allant de la limite extérieure du filet vers l'âme (12) ou bien est constituée d'un grand nombre de segments de lignes successives, éventuellement échelonnées droites ou courbées, qui suivent approximativement une forme circulaire ou parabolique, l'angle d'inclinaison moyen (β) des génératrices du flanc de filet (7) tourné vers la tête (3) de la vis étant environ de 60° par rapport à un plan (11) perpendiculaire à l'axe (10) de la vis, et en ce que l'âme (12) du segment de filet de la tige de vis (2) comprise entre deux filets (5) voisins est cylindrique.

2. Vis selon la revendication 1, caractérisée en ce que le segment cylindrique (12) entre deux filets (5) voisins correspond au moins à la moitié du pas de filetage (5).

3. Vis selon la revendication 1 et une quelconque des revendications précédentes, caractérisée en ce que le diamètre extérieur et le diamètre de l'âme du segment de filetage de la tige de vis (2) à partir de la pointe du forêt (4) en direction de la tête de la vis (3) augmentent de façon conique.

4. Vis selon la revendication 3, caractérisée en ce que le rapport du diamètre extérieur au diamètre de l'âme reste constant sur toute la longueur du segment de filetage de la tige de vis (2).

EP 0 357 700 B1

Fig. 2

Fig.1

Fig. 3

Fig.4

Fig. 5

Fig. 6

7